# EUROPEAN PATENT APPLICATION

(11) **EP 3 195 731 A1**
(43) Date of publication of application: **26.07.2017**
(21) Application number: 16151933.5
(22) Date of filing: 19.01.2016
(51) Int. Cl.: A23B 7/16

(54) **COATING FOR FRUIT**

(71) Applicant: Liquidseal Holding B.V., 2343 LB Oegstgeest (NL)
(72) Inventor: VAN VELZEN, Dick, 2343 BR Oegstgeest (NL); VAN DER LUIT, Johan Louis, 2341 PD Oegstgeest (NL); MONSTER, Victor Steven, 2343 BR Oegstgeest (NL); VAN DEN BERG, Eugene Robert, 2341 KD Oegstgeest (NL)
(74) Representative: van Dam, Vincent

(57) **Abstract**

The invention relates to a method for coating fruit to inhibit or prevent maturation and ripening of climacteric fruit during post-harvest storage and transport, a fruit item comprising a coating which inhibits or prevents maturation and ripening of the fruit item during post-harvest storage and transport, and a composition for coating fruit post-harvest to prevent or slow down maturation and ripening of climacteric fruit. The invention is in particular suitable for mangos, citrus fruit and bananas.

## Description

### BACKGROUND OF THE INVENTION

The invention relates to a method for coating fruit to inhibit or prevent maturation and ripening of climacteric fruit during post-harvest storage and transport, a fruit item comprising a coating which inhibits or prevents maturation and ripening of the fruit item during post-harvest storage and transport, and a composition for coating fruit post-harvest to prevent or slow down maturation and ripening of climacteric fruit. The invention is in particular suitable for mangos, citrus fruit and bananas.

Most fruits are harvested in an early to late preripening stage, subsequently cooled and transported by various means such as air transport but also by ship in containers. Upon arrival at its destination, such fruit is transported to cooled storage facilities, but may also be moved between cooled storage facilities a number of times. Here it remains until marketing and retail shipping. The same applies to bananas and several other kinds of fruit. Transporting fruit often involves long distance transport with a considerable time lapse. And in many producing countries, especially in the case of developing economies, a long period of time may elapse between picking and eventual refrigeration. This creates a pressure to harvest/pick fruit as early as possible. There is a limit to moving back the date of harvest due to the climacteric nature of these types of fruit. Climacteric fruit passes a point during its development, after which, left to itself either on the plant or after picking, or sometimes requiring artificial exposure to ethylene (a natural "ripening hormone"), such fruit will mature and ripen normally. This is often referred to as the point of climacterium. If harvested before this point, no amount of time or exposure to ethylene hormone will result in proper ripening with all its characteristic features, such as change of color, texture, development of sweetness and species specific taste and smell by the release from starch stores of free sugars and the synthesis of aromatic oils.

Once past the point of climacterium, the path towards ripening and inexorably over-ripening has irreversibly been set in. This leaves a limited time span for harvesting, processing, transporting and sale of such fruit. Over-ripening results in considerable commercial losses because a substantial amount of fruit has not yet been sold by the end of "shelf life". Similarly, commercial losses by complaints and re-imbursement of dissatisfied customers occur when fruit was picked to early and satisfactory ripening had not been achieved.

A final problem in this fine balance between timing of harvest and the limited time available to accommodate the whole of logistical processes, is the fact that the ripening fruit itself produces ethylene, with a positive feed-back on ethylene production on the fruit itself, which accelerates the ripening, leading to more ethylene production with further crescendo-wise acceleration. In this manner even a single item of fruit which matures ahead of the bulk of the stored fruit, can compromise the whole stored quantity.

Broken surfaces of stems of fruit cause vulnerability to infections due to cutting and areas of damage to fruit skin. These infections may manifest during and after storage, especially with molds and in particular botrytis species. These organisms and their spores are present in low density on all fruit already at harvest, but may cause infection in the stored fruit. Infected fruit will seriously affect retail prices of such fruit and lead to considerable losses. More importantly, such spores are present at relevant quantities in circulating air and especially in processing facilities where dust of dead plant material is present at high concentrations.

This vulnerability to infection is increased by the selective metabolic oxidation of large molecular structures during transport in the dark, such as tannins and terpenes which normally provide resistance to infections.

Similarly, fruit picked too late will ripen unduly and increased vulnerability to handling will lead to additional losses through infections.

The primary effective strategy commercially applied to counter the ripening problems consists of cooling to temperatures to various established optima (for example 13.4°C for bananas). For mangos and citrus fruit, variable temperatures, according to species differences, are applied to slow down metabolism and maturation of the fruit. Cooling also slows down developing of activated spores of harmful micro-organisms. One of the disadvantages of the cooling approach is that cooling involves high energy costs.

For bananas a second strategy is available and consistently applied, i.e. to eliminate any ethylene produced from the ambient air by treating the air with the aid of potassium permanganate, which oxidizes ethylene to the hormonally inactive ethylene oxide. However, this limits the carrying capacity of any container to which this is applied by 5% and thus adds significant further costs to the product.

Slowing down of maturation and ripening can also be established by restricting the amount of oxygen. However, if the amount of oxygen available for the fruit is too low, this will result in various metabolic responses such as the increasing activation of lactic acid metabolism, which can result in undesirable effects on fruit taste. Various coatings have been devised to provide a barrier protection to fruit during storage and transport. However, many of these coatings have a too low permeability for oxygen and therefore cannot be used.

Slowing down of maturation by restriction of oxygen has thus far been limited to reductions in the ambient atmosphere of whole (and thus hermetically sealed) containers or hard-walled storage cells. In light of the need for collection after harvest, transport, central storage, packing, shipment abroad across continents, receipt by distributors, and repacking / distribution to retailers, this is a strategy that cannot be maintained throughout the whole logistic chain. Therefore, it has not been explored for its potential other than in the long term storage of, for example, apples.

An alternative approach is to use 1-MCP, an artificial ethylene hormone-like molecule that blocks the ethylene receptor. 1-MCP can be applied as aromatic oil and can be vaporized into storage spaces. This will dissolve into the surface water of fruit and other plant tissues and block ethylene receptors within the tissues. US patent application 2011143004 discloses a slow-release system contained in a coating, using cyclodextrin micro-containers for extended release of ethylene receptor antagonist 1-MCP, which could result in an extended period during which ripening and maturation are inhibited. However, there are no examples of any factual effect of this coating on fruit or a post-harvest live product.

Thus, the state of the art of post-harvest protection of harvested climacteric fruit such as mangos, citrus fruit and bananas results in significant and unavoidable losses due to a combination of metabolic and infectious processes. This problem also applies to almost any other kind of climacteric fruit, such as papayas, lychees, oranges, apples, apricots, avocados, bananas, cantaloupes, figs, guavas, kiwis, nectarines, peaches, pears, persimmons, plums, and tomatoes.

Therefore, there is a strong need in the fruit industry for means to slow down the maturation process of such fruit, not displaying the above described disadvantages and possibly even leading to further reduction of these problems by allowing harvesting at a later stage, resulting in positive effects on taste and appearance of the fruit.

Objects of the present invention are therefore to provide a means for protection of fruit, especially mangos, citrus fruit and bananas, during storage; and a storage method, that effectively controls a mini-environment surrounding each individual item of fruit, wherein these are protected from harmful influences. Because of this, the storage life of the fruit item is extended and the fruit, once harvested and ripened, remains appreciable to clients for a longer period of time (i.e. it has an extended shelf life).

### SUMMARY OF THE INVENTION

The present invention relates to a method for coating fruit to inhibit or prevent maturation and ripening of climacteric fruit during post-harvest storage and transport, comprising applying post-harvest to said fruit a composition comprising a polymer produced from the monomers vinyl acetate and ethylene and optionally a vinyl ester of a highly branched carboxylic acid, and optionally glycerol to form a coating, the composition being in the form of a dispersion and the balance of the composition being water.

In a further aspect the invention relates to a fruit item, coated with a composition comprising a polymer produced from the monomers vinyl acetate and ethylene and optionally a vinyl ester of a highly branched carboxylic acid; and optionally glycerol.

In a further aspect, the invention relates to a composition for coating fruit to inhibit or prevent maturation and ripening of climacteric fruit during post-harvest storage and transport, which composition comprises a polymer produced from the monomers vinyl acetate and ethylene and optionally a vinyl ester of a highly branched carboxylic acid and optionally glycerol, the composition being in the form of a dispersion and the balance of the composition being water.

In a still further aspect the invention relates to the use of abovementioned composition for inhibiting or preventing maturation and ripening of climacteric fruit during post-harvest storage and transport.

Although compositions with glycerol amounts of 1 % or more by weight of the polymer in the composition may also be well applicable in the method of the invention and on the fruit item of the invention, it has been found that glycerol amounts of lower than 1% by weight of the polymer in the composition, when applied to climacteric fruit post-harvest, in particular to citrus fruit such as oranges, results in an even longer prolongation of shelf life compared to compositions with higher glycerol amounts. Therefore it is preferred that the composition comprises glycerol in an amount of 0,0 or more and less than 1,0 % by weight of the polymer within the composition.

The coating allows for a minimal continued metabolism and maturation of the fruit item within the coating. The coating composition is applied to harvested fruit. After the composition applied to the fruit has dried to the air, a protective film is formed around the tissues. This protective film (coating) has a degree of plasticity that allows for maintained integrity of the coating during the post-coating phase, which involves shape changes of the fruit items. The coating has sufficient water permeability and permeability to oxygen and carbon dioxide to prevent death of tissue by suffocation or accumulation of toxic quantities of CO₂. At the same time, the coating actively slows down the metabolic oxidation of sugars that allow for maturation and subsequent ripening of the coated fruit item, by controlling restriction of access of oxygen to the fruit tissue.

The coating composition, once applied, has considerable potential for reduction of water vapor loss. Furthermore, due to its reduced but still sufficient CO₂ permeability, metabolic intoxication of fruit skin and underlying tissues will be prevented. Production of CO₂ will also be reduced, because metabolic production of CO₂, as a result of oxidative turnover of sugars, will be prevented.

Surprisingly, the coating, once applied to the fruit is sufficiently permeable for water to prevent accumulation of too much metabolic water under the coating. Such accumulation would increase the risk of invasive infection.

The present coating, having the required controlled levels of permeability to water and gasses, allowing for adaptive plasticity to fruit and skin tissue dimensional changes and effectively restricting metabolic breakdown of stored starch, fulfils the existing needs.

The method of the invention has the effect that fruit items coated accordingly can be stored over a longer time period than uncoated fruit, whilst maintaining good quality. It has been found that applying the method of the invention to fruit results in prolonged storage capacities of up to 2 weeks longer or more compared to the state of the art.

### DETAILED DESCRIPTION OF THE INVENTION

In one aspect, the invention relates to a method for coating fruit to inhibit or prevent maturation and ripening of climacteric fruit during post-harvest storage and transport, comprising applying post-harvest to said fruit a composition comprising a polymer produced from the monomers vinyl acetate and ethylene and optionally a vinyl ester of a highly branched carboxylic acid, and optionally glycerol to form a coating, the composition being in the form of a dispersion and the balance of the composition being water.

In a further aspect the invention relates to a composition for use in the method of the invention and which is therefore suitable to obtain the fruit item of the invention. This composition comprises a polymer produced from the monomers vinyl acetate and ethylene and optionally a vinyl ester of a highly branched carboxylic acid; and optionally glycerol, the composition being in the form of a dispersion and the balance of the composition being water. Within the scope of the invention, also concentrated coating compositions are envisaged, comprising a water content of less than 50 %, preferably less than 25% by volume of the composition. These concentrated compositions may therefore be transported easier, and can be diluted prior to use to the desired concentrations.

The method of the invention may be applied to inhibit or prevent post-harvest fruit infection. The method is preferably applicable to fruit selected from the group of banana, mango, melon, citrus fruits, papayas, lychees, oranges, apples, apricots, avocados, bananas, cantaloupes, figs, guavas, kiwis, nectarines, peaches, pears, persimmons, plums, and tomatoes. The method is preferably suitable for inhibiting or prevention of maturation and ripening of mangos and/or citrus fruit, such as oranges, during post-harvest storage and transport. In case of a concentrated composition with low water content, the composition is diluted prior to use. Said method may result in a thickness of the coating of from 0,3 to 12 µm, preferably 1,5 to 5 µm. A coating of 1,5 to 5 µm is particularly preferred because this provides a minimum weight loss of coated fruit items, while still prolonged shelf life is achieved.

The dispersion of the coating composition according to the invention may be applied one or more times directly on the fruit items. Preferably the dispersion is applied once. The coating dispersion can be applied by several techniques, preferably by spraying or immersion rather than by brushing. When the coating dispersion used has a high viscosity, preferably a dilution of the dispersion is used for applying the dispersion, whereas with a polymer dispersion with a low viscosity, preferably a spraying / immersion technique is used. The coating is allowed or made to dry after being applied.

In view of environmental issues the coating is preferably, even if only at a very slow rate, water soluble. Thereby, e.g. bacteria more rapidly and easily break down the coating after its use into harmless products, i.e. carbon dioxide and water.

The dispersions produced from these polymers allow for inclusion of glycerol, and should not sequester glycerol during the drying process. Further, the polymer dispersions should preferably allow for the inclusion and effective release of bioactive agents.

In case the polymer is produced from the monomers vinyl acetate and ethylene, the polymer is a copolymer. Such copolymer may e.g. be Vinnapas EP 400 or Vinnapas EF 3777 of Wacker Chemie AG.

In case the polymer is produced from the monomers vinyl acetate, ethylene and a vinyl ester of a highly branched carboxylic acid, the polymer is a terpolymer. Highly branched carboxylic acids include tertiary carboxylic acids, including neo alkanoic acids which exhibit highly branched structures in which the carboxylic group is attached to a quaternary carbon atom where R1, R2 and R3 are alkyl groups. Examples of such acids are neopentanoic acids and neodecanoic acids, such as versatic acid of Momentive Performance Materials or Hexion. For instance versatic acid (9 or 10) of Momentive Performance Materials or Hexion may be used. The vinyl ester of a highly branched carboxylic acid is chosen to affect the rate at which the acetate ester may saponificate and thus to stabilize the terpolymer molecules. The highly branched carboxylic acid preferably protects the other constituent monomers from saponification. Due to the hydrophobic nature of the carboxylic acid the water resistance and water uptake of the films formed are markedly reduced. Said terpolymer dispersions have the ability to provide substantial resistance to sagging, while still providing good leveling, resulting in very homogenous layer thickness throughout an applied coating. The monomers vinyl acetate, ethylene and highly branched carboxylic acid, the branches of the carboxylic acid preferably having a high degree of free rotation, are present in the terpolymer in substantially equal proportions. The terpolymer may e.g. be Vinnapas EZ 3523 of Wacker Chemie AG.

The high degree of branching and the high degree of rotation of the branches thus provided to the terpolymer increases its ability to form strong films. The resistance of said films to water and their ability to entrap the water binding secondary material glycerol, as a "channel material" is thereby increased.

Preferred are amounts of glycerol between 0,0 and 2,0 % by weight of the polymer within the composition. Incorporation of these amounts has been shown to have the most pronounced effect in the inhibition or prevention of maturation and ripening of a range of climacteric fruit species during post-harvest storage and transport. Amounts of glycerol may be between 0,2 and 1,4% by weight of the polymer within the composition, such as between 0,4 and 1,2 % by weight of the polymer within the composition. It is more preferred that the composition comprises a polymer produced from the monomers vinyl acetate and ethylene and optionally a vinyl ester of a highly branched carboxylic acid and glycerol in an amount of 0,0 or more and less than 1,0 % by weight of the polymer within the composition, the composition being in the form of a dispersion and the balance of the composition being water. Even more preferably the glycerol concentration is chosen in an amount of more than 0,0 and less than 0,4 % by weight of the polymer within the composition, because these percentages provide the most pronounced prevention of maturation and ripening of commercially important climacteric fruits such as citrus fruits, in particular oranges.

Particularly suitable are compositions wherein the glycerol concentration is about 0,2 % (for example between 0,15% and 0,25% or between 0,175% and 0,225%) by weight of the polymer within the composition. Such composition has surprisingly been found to provide a very long lasting effect on the prevention of maturation and ripening of citrus fruit, in particular oranges. Another suitable embodiment of the composition comprises glycerol in an amount of about 0,3% (for example between 0,25% and 0,35% or between 0,275% and 0,325%) by weight of the polymer within the composition. Such composition has surprisingly been found to provide a very long lasting effect on the prevention of maturation and ripening of mangos.

Importantly, the inclusion of sufficient glycerol allows for inclusion of variable concentrations of bioactive agents such as crop protective agents (CPAs). These agents will exert their function over an extended period because of continued slow release and build-up of effective concentrations of CPA released by said coating.

In this respect, a coating composition comprising glycerol may act as a carrier for slow release of bioactive agents, such as CPAs.

A coating composition may therefore in addition to the components mentioned above, also comprise at least one bioactive agent, in particular at least one CPA. If one or more CPAs are included in the coating composition, the coating will result in a decrease of the risk of infection by slowing down the development of spores already present before applying the coating. Because of slow and sustained release of the entrapped CPAs, the coating forms a barrier to newly deposited possible harmful micro-organisms for an extended-time.

Compositions for use in the method of the invention may comprise the polymer (copolymer or terpolymer) in an amount of from 1 to 25 % by weight of the composition. Preferably the composition of the invention comprises the polymer in an amount of from 3 to 6 % by weight of the composition, more preferably in an amount of from 1,5 to 5 %.

The amount of polymer and the amount of glycerol will determine the permeability and the capacity for encapsulation of water soluble bioactive agents of the coating derived from the dispersion. The person skilled in the art will appreciate that, by varying the relative amounts of polymer and glycerol, the permeability to water and gasses, and thus restriction of metabolic activity of the underlying tissues may be controlled. If a coating less open to water and gas transmission is desired, the relative amount of polymer may be increased, or the amount of glycerol may be lowered. In this respect, also the choice of the polymer plays a role. The person skilled in the art will appreciate that, by varying the type of polymer used for the base of the coating - provided that the dry film will fully incorporate the glycerol - films of variable properties with respect to tensile strength, flexibility and transparency will be formed to suit any application, while retaining the capability of functioning as low-dose / slow-release system for any water soluble agent or formulation entrapped within the dry film formed.

As mentioned above, the permeability to water should be sufficient to allow excess water (a product of metabolic breakdown of sugars) to pass through the coating, once the coating is applied to a fruit item. Such excess free water on the interfaces to the external environment (damp barrier) may be formed during sudden temperature changes. On the other hand, once applied, the coating should limit the amount of water loss of the coated fruit item.

Further, the coating should be suitably permeable to gasses, specifically to oxygen and carbon dioxide. The coating effectively controls the levels of such gasses within its confines, thereby forming stable conditions in the mini-environment enclosing the fruit items. The conditions in the mini-environment are beneficial for this fruit item with e.g. respect to storage lifespan, i.e. shelf life, and appreciation.

Typical physical values associated with the preferred permeability to gasses and water for such a coating are for instance, a water permeability of larger than 300 ml/m².bar.day, an oxygen permeability of less than 100 ml/m².bar.day, and a carbon dioxide permeability of less than 200 ml/m².bar.day, as measured at 25°C, with a coating membrane thickness of 25 µm, and a relative humidity of 0 %.

Depending on the specific composition of the coating, the coating further may act as a UV-absorber and/or UV-reflector. As mentioned above, the coating supports the formation of a mini-environment. Such a mini-environment may protect the enclosed fruit item from light, more specifically from UV-light. Light typically has a negative effect on the storage life and appearance of harvested fruit. If the coating acts as a UV-absorber and/or a UV-reflector, storage life will be increased and the appearance of the fruit will remain acceptable for a longer time. To this end, additional UV-blockers and/or UV-stabilizers may be added to the composition.

The viscosity of the polymer dispersion composition is related to the molecular weight (Mw), degree of pre-polymerization and cross-linking, chain branching, variations in hydrophobicity and rotation flexibility of the polymer backbone, and the proportional solid content of the dispersion solution used. Typical values for the viscosity of the dispersion compositions are from 5-20 mPas (as determined according to the Hoeppler falling ball method, with a 3 wt.% solution at 20°C), however viscosity values outside this range may also be applicable.

To the coating composition also at least one bioactive agent may be added, in particular at least one CPA. The coating formed from such a coating composition provides a barrier function to newly attaching spores from the ambient air, but also exposes spores already present at the moment of coating.

These bioactive agents may be selected from the group of ethylene oxidants or neutralizers, antibiotics, fungicides, stabilizers, anti-parasitics, anti-infection means, other biologically active compounds, compounds controlling biological active molecules, useful bacteria, useful fungi, useful enzymes, UV-stabilizers, UV-blockers, etc. Such bioactive agents can be chosen from any group of available and suitable bioactive agents. Such bioactive agents will be used in order to further improve the conditions during storage of the harvested fruit and to further maintain health, appearance and thus commercial value in a later stage of commercial use. Preferably the bioactive agents do not form a health or environmental risk.

Preferably the one or more bioactive agents are used in an amount of less than 5 % by weight of the polymer within the coating composition. For practical purposes, the bioactive agents are preferably water soluble, although other bioactive agents, which can be made water-soluble, such as by using a carrier or encapsulation, are also applicable. In other cases an emulsifier may be added. Based on experiences obtained from the experiments and studies described in the illustrations below, bioactive agents are released from the coating composition in a protracted manner, improving bioavailability thereof.

Preferred bioactive agents are selected from the group of ethylene oxidants or neutralizers, anti-biotics, fungicides, pesticides, fertilizers and anti-parasitics.

The obtained coatings surprisingly offer a further advantage of slow and thereby effective release of bioactive agents into a small space between the coating and the surface of the coated item. All bioactive agents dissolved in the dispersion composition, are concentrated into the ensuing coating upon drying. Due to the absence of any perceivable sequestration, they are distributed homogeneously throughout the coating as formed. With fixed concentrations of bioactive agents in the dispersion, reducing polymer solid content thus will result in reduced thickness of the coating and progressively higher concentrations of these bioactive agents in the polymer coating. With reducing film thickness, average diffusion time for any bioactive agents contained the coating to the surface of a coated item will decrease.

Thus dosage / time relationships as well as locally or topically achieved concentrations of the bioactive agents can be controlled. The use of these coatings thereby allows for a significant reduction in the overall amounts of bioactive agents.

Especially, in view of the decreased risk of fungal infection when applying the coating composition of the invention, the amount of fungicide to be added to the composition is in some cases only 5 to 20 % of the amount required when applying conventional methods such as dipping the items in or spraying the items with aqueous solutions containing fungicides.

Not only are such included bioactive agents more effective with respect to their intended purpose, but also a reduction of required amounts is achieved, reducing the costs involved and possible environmental damage. Similarly, residues of these bioactive agents that remain on any commercially sold fruit items to which the public may become exposed may be significantly reduced. In some cases 30 fold reductions having been recorded.

As mentioned above, once applied to a fruit item, the coating preferably has a thickness after formation of 0.3 to 12 µm, more preferably of 1,5 to 5 µm. It is clear that if the coating is too thick, permeability towards water will become too low. In case the coating is too thin, the enclosure will be too open to gasses, and further a risk of uneven coatings, which may show ruptures or holes, arises. In addition, with very thin coatings and higher concentrations of bioactive agents included, said agents will be released too rapidly. Concentrations from bioactive agents released too rapidly may become locally toxic to the exposed plant tissues. This can especially be relevant in the case of vulnerable, thinly skinned soft fruits and fruit items in which the skin has an additional role in photosynthesis of sugars.

Preferably, coating compositions for use according the invention are essentially free of any organic solvents, especially free of alcohol solvents, since such solvents are toxic for mangos and other fruit items.

In a further aspect the invention relates to a fruit item, coated with a composition comprising a polymer produced from the monomers vinyl acetate and ethylene and optionally a vinyl ester of a highly branched carboxylic acid; and optionally glycerol. Further characteristics of the composition have been discussed above in respect of the method of the invention. Because of the coating which is applied on the fruit item according to the method of the invention maturation and ripening of climacteric fruit during post-harvest storage and transport are inhibited or prevented. In order to obtain full effect the coating is required to cover the fruit item integrally.

The fruit item is preferably selected from the group of banana, mango, melon, citrus fruits, papayas, lychees, oranges, apples, apricots, avocados, bananas, cantaloupes, figs, guavas, kiwis, nectarines, peaches, pears, persimmons, plums, and tomatoes. In particular the fruit item may be a mango or a citrus fruit, such as an orange.

The fruit item is preferably coated with a coating with a thickness of from 0,3 to 12 µm. Particularly preferred are coatings with a thickness of 1,5 to 5 µm for the reasons described above in relation to the method of the invention.

The coating covering the fruit item preferably comprises glycerol in an amount of between 0,0 and 2 % by weight of the polymer within the coating. When the composition used for coating the fruit item contains these amounts the most pronounced effect in the inhibition or prevention maturation and ripening of a range of climacteric fruit species during post-harvest storage and transport is achieved. Amounts of glycerol may be between 0,2 and 1,4% by weight of the polymer within the coating, such as between 0,4 and 1,2 % by weight of the polymer within the coating. Particularly suitable are amounts of 0,0% or more and less than 1,0 %, preferably less than 0,4 % of glycerol by weight of the polymer within the coating, which are in particularly suitable for commercially important fruits such as citrus fruits. Suitable exemplary fruit items may have a coating that contains about 0,2 % (for example between 0,15% and 0,25% or between 0,175% and 0,225%) or about 0,3% (for example between 0,25% and 0,35% or between 0,275% and 0,325%) of glycerol by weight of the polymer within the composition.

In a still further aspect the invention relates to the use of abovementioned composition, of which the characteristics are discussed above in relation to the other aspects of the invention, for inhibiting or preventing maturation and ripening of climacteric fruit during post-harvest storage and transport.

The following examples are meant to illustrate and not to limit the invention.

### EXAMPLES

### Example 1

Commercially obtained mangos (average weight 670 grams) having been released to retail after activation by exposure to ethylene 2 days prior to purchase, were allowed to stabilize for 2 days at room temperature before being coated as an example of late intervention. The coating composition comprised a terpolymer, being Vinnapas EZ 3523 made by Wacker Chemie AG, glycerol and water. For this purpose, coating dispersions comprising 1,5, 3, 6, and 12 % w/v terpolymer were prepared to render coatings of a layer thickness of 1,5 µm, 3 µm, 6 µm, and 12 µm, respectively. Glycerol was added to the compositions in varying concentrations of from 0,1% to 0,5%, 1,0% and 1,5% by weight based on the weight of polymer in the composition. Mangos were randomized to groups to be treated with each combination of polymer content / layer-thickness of the coating and glycerol content. Each group consisted of 10 mangos.

On day 2 after coating, mangos were weighed and placed in metabolic study containers (volume 4000 ml of ambient air). These were placed in a temperature controlling unit at a temperature of 13.4 °C (+/- 0,1 degree, Systech Instruments, Gaspace 2). All containers were sampled once a day for oxygen content, CO₂ content and ethylene content by needle aspiration through the silicone membrane sealed opening in the otherwise airtight lids. This was followed by opening of all containers and flushing the air content with fresh air before reclosing the containers. The result of averaging measured values for each treatment group of 10 mangos and over 2 consecutive days of measurements, are shown in table 1 and table 2:

**Table 1. Effect of coating on oxygen consumption of mangos**

| **O₂ consumption in ml / gram mango / 24 hours** | | **Glycerol content in % weight / weight of polymer** | | | |
|---|---|---|---|---|---|
| | | 0,1 | 0,5 | 1,0 | 1,5 |
| **Layer thickness in microns** | 12 | 0,01 | 0,03 | 0,06 | 0,11 |
| | 6 | 0,03 | 0,05 | 0,09 | 0,14 |
| | 3 | 0,06 | 0,11 | 0,16 | 0,21 |
| | 1,5 | 0,11 | 0,17 | 0,25 | 0,33 |

**Table 2. Effect of coating on weight loss of mangos**

| **Weight loss in % of starting weight / mango / 24 hours** | | **Glycerol content in % weight / weight of polymer** | | | |
|---|---|---|---|---|---|
| | | 0,1 | 0,5 | 1,0 | 1,5 |
| **Layer thickness in microns** | 12 | 0,06 | 0,11 | 0,15 | 0,26 |
| | 6 | 0,09 | 0,18 | 0,23 | 0,35 |
| | 3 | 0,16 | 0,26 | 0,31 | 0,55 |
| | 1,5 | 0,24 | 0,35 | 0,49 | 0,78 |

It is evident from the results that there is clear expression of a restrictive effect of coating on oxygen use of the mango tissue proportional to layer thickness of the coating, indicating a decrease of oxygen use with thicker coating layers covering the mangos. The restrictive effect of coating the on oxygen use is inversely proportional to glycerol content, indicating increase of permeability with glycerol content as a permeabilizing agent. The degree of oxygen removal from the atmosphere by mango tissue is directly related to weight loss of the mangos, presumably reflecting not just water loss but predominantly loss of mass through the oxidative consumption of sugars and the associated starches from which such sugars can be released by hydrolysis.

### Example 2

Commercially obtained mango's (n=60, average weight 478 grams), not yet exposed to ethylene, were randomized to 10 separate groups of 10 mangos each. Mangos in successive groups were coated with a solution of a copolymer of ethylene and vinyl acetate (similar dispersions such as Vinnapas EF 3777, may be purchased from Wacker GmbH, Germany) to which glycerol was added in concentrations of 0,2, 0,4, 0,6, 0,8, 1,0, 1,2 1,4, 1,6% of weight proportional to the weight of the dispersed polymer. Mangos were coated at a layer thickness of 5 microns. One group of 10 mangos was not coated in order to serve as a control group. Furthermore, one group of 10 mangos was coated with polymer without any addition of glycerol in order to serve as a comparison group. After coating by immersion and drying, mangos were kept at room temperature to simulate storage and transport conditions and allowed to mature naturally and eventually ripen. Mangos were weighed at 2 day intervals and observed on a daily basis for signs of unwanted effects such as infection (black spots, stem rot), signs of age related changes (wrinkling), ripening (color change) and signs of becoming over-ripe (smell of fermentation). Mangos considered no longer sellable i.e. to be at the end of their shelf-life, were removed from the population. The results are shown in Table 3, which shows the number of remaining mangos after 4, 8, 12 and 16 days after coating with coating compositions containing various glycerol concentrations:

**Table 3. The influence of glycerol content in the coating on shelf-life of coated mangos**

| **Group:** | | **Time in days** | | | |
|---|---|---|---|---|---|
| | | **4** | **8** | **12** | **16** |
| **Controls,untreated** | | 10 | 9 | 5 | 1 |
| **Coating according to % glycerol:** | **0**% | 9 | 7 | 3 | 0 |
| | **0**,**2**% | 9 | 7 | 5 | 3 |
| | **0**,**4**% | 9 | 8 | 7 | 6 |
| | **0**,**6**% | 10 | 9 | 7 | 7 |
| | **0**,**8**% | 10 | 9 | 8 | 7 |
| | **1**,**0**% | 10 | 10 | 10 | 9 |
| | **1**,**2**% | 10 | 9 | 9 | 7 |
| | **1**,**4**% | 9 | 9 | 6 | 3 |
| | **1**,**6**% | 10 | 9 | 5 | 2 |

It is evident from these data that a clear effect of coating on the shelf life of mangos exists. The most pronounced effect on shelf life is achieved with a coating of 5 microns with 1% weight / weight added glycerol. Coatings with higher glycerol content progressively revert to the values seen in controls but surprisingly, coatings with lower glycerol content, reaching a maximum in coatings without any glycerol added, show progressively worsening results ending up with shelf lives shorter than those of controls. These findings provide further support for the appreciation that coatings formulated in the manner as described in this invention will, under certain conditions result in suppression of metabolism through restriction of oxygen access to the fruit tissues. This results in prolongation of shelf life through slowing down of maturation and the postponement of ripening.

### Example 3.

Commercially obtained mangos, 20 in total, not yet exposed to ethylene for induction of synchronized ripening, were used for the study. After randomization to either of 2 groups, all mangos (average weight 570 grams), were coated with a 5 micron layer of coating based on a copolymer of ethylene and vinyl acetate with 1% of glycerol proportional to polymer content of the dispersion. The coated and uncoated mangos were allowed to rest for 2 days at 13°C in ambient air in the dark, followed by gassing with ethylene (400 ppm for 2 hours) along with a commercial load of mangos prepared for release to retail shops. Subsequently, groups were compared for the development of ripening and the presence of any delay or a reduction of success rate as a result of coating (Table 4).

**Table 4. Influence of coating on induction of ripening**

| **Group:** | **Mangos reached ripeness in days** | | | |
|---|---|---|---|---|
| | **4** | **8** | **12** | |
| **Controls,untreated:** | 6 | 9 | 10 | |
| **Coating 1% glycerol:** | 7 | 9 | 10 | |

It is evident from the data above that there is no clear evidence of any delay in or failure to induce ripening in coated mangos due to coating having been applied.

### Example 4

The coatings as formulated are able to function as low-dose / slow-release system for bioactives. Twenty eight commercially purchased mangos (average weight 495 grams), obtained 2 days after exposure to ethylene at 400 ppm for 2 hours to induce to synchronize development of ripeness, were randomized to each of 7 groups of 4 mangos each and coated with a coating dispersion based on the terpolymer backbone (comparable to that available from Wacker GmbH as Vinnapas EZ 3523). For this purpose, in the dispersions concentrations of 0,2, 1,0 and 1,6% of glycerol were used on a weight / weight basis proportional to the weight of the dispersed polymer. In addition, to each of these dispersions, Citrex™, a well-established bioactive for the prevention of infections in tropical fruit was added at 4 and 20% of the recommended concentration. This resulted in in a 5 micron layer of film after drying. The mangos were allowed to dry and were kept on a table, comparable to household situation after purchase. They were monitored daily for the emergence of signs of stem rot. Any mango developing this was removed from the population. The following table records the number of mangos remaining in each group / treatment combination at day 4, 8, 12 and 16 post-application of the coating / Citrex dispersions.

Table 5 presents the results of this study example.

**Table 5. Influence of fungicide in the coating on the rate of stem rot of mangos**

| **Group:** | | **Time in days** | | | |
|---|---|---|---|---|---|
| | | **4** | **8** | **12** | **16** |
| **Controls,untreated 5 gr/l Citrex** | | 4 | 3 | 2 | 1 |
| | **0,2 % glycerol / 0,2 gr/l Citrex** | 4 | 2 | 2 | 2 |
| | **0,2 % glycerol / 1,0 gr / l Citrex** | 4 | 3 | 3 | 2 |
| | **1,0 % glycerol / 0,2 gr/l Citrex** | 4 | 4 | 4 | 3 |
| | **1,0 % glycerol 1,0 gr/l Citrex** | 4 | 4 | 4 | 4 |
| | **1,6 % glycerol / 0,2 gr/l Citrex** | 4 | 3 | 3 | 2 |
| | **1,6 % glycerol 1,0 gr/l Citrex** | 4 | 4 | 3 | 3 |

These results show that Citrex is able to reduce the effects of infections (in the case of mangos presenting as stem rot) in a dose related manner, however achieving effective control of such infections at doses at < 20% of recommended dose and with effectivity related to layer thickness of the coating and of permeability i.e. release from the coating on the surface onto the affected parts of the mango, i.e. the stem. From these results follows a dose / response relationship with dosing at 1,0 gram / liter of dispersion of Citrex (20% of recommended dose) performing better than dosing at 0,2 gram / liter (5% of recommended dose).

At the same time there is a strong suggestion that slowing release too much (with very low glycerol content resulting in reduced release of Citrex trapped within the dried-up film) results in less effect of Citrex on stem rot. The opposite can be observed when glycerol concentrations higher than 1 %, such as in 1,6% glycerol, are applied. In this case a good effect is realized, but protection does not seem to last beyond 8 days, whereas with 1% of glycerol this extends to 16 days for the 1,0 gram/ liter dose and 12 days for the 0,2 gram/ liter dose.

Thus in summary, coating mangos post-harvest with a coating composition of the invention, in actual field trials under commercial conditions under circumstances as encountered in routine production facilities, and as described, leads to:
1. Reduction of metabolic activity as expressed by reduced oxygen use and reduction of associated weight loss in time of mangos under the circumstances as tested.
2. Prolongation of shelf life of mangos under the circumstances tested due to slowing down of maturation and subsequent ripening of fruit.
3. Reduction of or elimination of losses due to infection during mango harvest, storage and or transport.
4. Unimpaired ability to synchronize and activate ripening by short term exposure to high concentrations of ethylene.
5. Significant increase in value of mango production and processing.

### Example 5

To test the effect of coating oranges post-harvest to obtain a fruit item according to the invention, oranges in successive groups of 24 oranges were coated with a solution of a copolymer of ethylene and vinyl acetate (similar dispersions such as Vinnapas EF 3777, may be purchased from Wacker GmbH, Germany) to which glycerol was added in concentrations of 0, 0,2, 0,4, 0,7, 1,1, 1,5. Control oranges were not coated. Coatings, containing 5 or 10% by weight to volume of polymer solids, were applied by dipping resulting in a layer thickness of 5 (W5) and 10 micron (W10) respectively. Table 6 shows the average weight loss per orange calculated from a set of 24 oranges when oranges were coated with a layer of 5 µm thickness.

**Table 6. The influence of various glycerol concentrations in a coating of 5 µm thickness on the weight loss of oranges in time. The values in the table correspond to the % weight loss relative to the weight of the fruit items at day 0.**

| Coating | Days after coating | 1 | 2 | 3 | 6 | 7 | 8 | 9 | 10 |
|---|---|---|---|---|---|---|---|---|---|
| W5-0 % glycerol | | 1,10 | 2,10 | 3,18 | 5,38 | 6,20 | 7,07 | 7,64 | 8,54 |
| W5-0,2 % glycerol | | **1,08** | **2,06** | **3,06** | **5,16** | **5,88** | **6,77** | **7,27** | **8,15** |
| W5-0,4 % glycerol | | 1,18 | 2,30 | 3,32 | 5,48 | 6,25 | 7, 15 | 7,70 | 8,60 |
| W5-0,7 % glycerol | | 1,19 | 2,34 | 3,35 | 5,58 | 6,31 | 7,24 | 7,86 | 8,78 |
| W5-1,1 % glycerol | | 1,25 | 2,35 | 3,38 | 5,51 | 6, 21 | 7,16 | 7,70 | 8,71 |
| W5-1,5 % glycerol | | 1,17 | 2,31 | 3,38 | 5,65 | 6,42 | 7,37 | 7,8 | 8,88 |
| Control | | 1,46 | 2,94 | 4,33 | 7,13 | 8,14 | 9,33 | 10,18 | 11,09 |

| Coating | Days after coating | 13 | **15** | **16** | **20** | **21** | **22** | **23** | **24** |
|---|---|---|---|---|---|---|---|---|---|
| W5-0 % glycerol | | 10,32 | 12,42 | 13,22 | 14,87 | 15,57 | 16,31 | 16,82 | 17,57 |
| W5-0,2 % glycerol | | **9,79** | **11,79** | **12,42** | **13,93** | **14,53** | **15,24** | **15,65** | **16,34** |
| W5-0,4 % glycerol | | 10,38 | 12,44 | 13,25 | 14,88 | 15,53 | 16,38 | 16,85 | 17,61 |
| W5-0,7 % glycerol | | 10,64 | 12,78 | 13,60 | 15,35 | 16,07 | 16,88 | 17,39 | 18,18 |
| W5-1,1 % glycerol | | 10,31 | 12,32 | 13,02 | 14,71 | 15,35 | 16,13 | 16,62 | 17,38 |
| W5-1,5 % glycerol | | 10,78 | 13,01 | 13,76 | 15,60 | 16,33 | 17,18 | 17,62 | 18,36 |
| Control | | 13,31 | 16,01 | 16,98 | 19,00 | 19,80 | 20,80 | 21,25 | 22,22 |

Table 7 shows the average weight loss per orange calculated from a set of 24 oranges when oranges are coated with a layer of 10 µm thickness.

**Table 7. The influence of various glycerol concentrations in a coating of 10 µm thickness on the weight loss of oranges in time. The values in the table correspond to the % weight loss relative to the weight of the fruit items at day 0.**

| Coating | Days after coating | **1** | **2** | **3** | **6** | **7** | **8** | **9** | **10** |
|---|---|---|---|---|---|---|---|---|---|
| W10-0 % glycerol | | 1,06 | 2,19 | 3, 24 | 5,53 | 6,32 | 7,22 | 7,86 | 8,90 |
| **W10-0,2** % glycerol | | **1,09** | **2,16** | **3,14** | **5,23** | **6,02** | **6,85** | **7,43** | **8,31** |
| W10-0,4 % glycerol | | 1,26 | 2,57 | 3,80 | 6,39 | 7, 26 | 8,30 | 9,08 | 10,15 |
| W10-0,7 % glycerol | | 1,18 | 2,39 | 3,52 | 5,89 | 6,71 | 7,60 | 8,25 | 9,15 |
| W10-1,1 % glycerol | | 1,19 | 2,29 | 3,39 | 5, 63 | 6,49 | 7,40 | 8,08 | 9,05 |
| W10-1,5 % glycerol | | 1,10 | 2,15 | 3,17 | 5, 29 | 6, 04 | 6,86 | 7,47 | 8,32 |
| Control | | 1,46 | 2,94 | 4,33 | 7,13 | 8,14 | 9,33 | 10,18 | 11,09 |

| Coating | Days after coating | **13** | **15** | **16** | **20** | **21** | **22** | **23** | **24** |
|---|---|---|---|---|---|---|---|---|---|
| W10-0 % glycerol | | 10, 74 | 13,08 | 13,88 | 15,82 | 16,61 | 17,54 | 17,96 | 18,85 |
| **W10-0,2** % glycerol | | **10,13** | **12,32** | **13,10** | **14,87** | **15,75** | **16,43** | 1**6,87** | **17,68** |
| W10-0,4 % glycerol | | 12,47 | 15,26 | 16,19 | 18,47 | 19,41 | 20,42 | 20, 93 | 21,90 |
| W10-0,7 % glycerol | | 11,25 | 13, 62 | 14, 66 | 16,41 | 17,28 | 18,24 | 18,71 | 19, 62 |
| W10-1,1 % glycerol | | 11,09 | 13,58 | 14,45 | 16, 77 | 17,54 | 18,32 | 18,78 | 19, 63 |
| W10-1,5 % glycerol | | 10,18 | 12,36 | 13,13 | 15,03 | 15,79 | 16, 62 | 17,07 | 17, 91 |
| Control | | 13,31 | 16, 01 | 16,98 | 19, 00 | 19,80 | 20,80 | 21,25 | 22,22 |

The results of tables 6 and 7 show that a composition in the form of a dispersion, the balance of the composition being water, comprising a polymer produced from the monomers vinyl acetate and ethylene and optionally a vinyl ester of a highly branched carboxylic acid and glycerol in an amount between 0,0 and 1,5 % by weight of the polymer within the composition when applied on oranges results in a reduction of weight loss compared to oranges without a coating. A coating with a glycerol percentage of about 0,2 % by weight of the polymer within the coating composition provides the lowest percentage of weight loss over a period of 24 days. This effect is the most pronounced when the coating has a thickness of 5 µm and a glycerol content relative to polymer solids of approximately 0,2% weight / weight.

### Example 6

Sets of 12 oranges were coated (layer thickness of 5 microns (W5)) with a solution of a copolymer of ethylene and vinyl acetate (similar dispersions such as Vinnapas EF 3777, may be purchased from Wacker GmbH, Germany) to which glycerol was added in concentrations of 0 % (W5-0), 0,2 % (W5-0,2), 0,4 % (W5-0,4), 0,7 % (W5-0,7), 1,1 % (W5-1,1), 1,5 % (W5-1,5) by weight of the polymer within the coating composition. Control oranges were not coated. Coatings were applied by dipping resulting in a coating of about 5 µm thickness. The oranges were allowed to dry and were kept on a table, comparable to household situation after purchase. They were monitored daily for the emergence of signs of rotting. Any orange developing this was removed from the population. Table 8 shows the number of remaining intact oranges during a period of up to 34 days.

**Table 8. Influence of glycerol concentration in the coating on the rate of rotting of oranges.**

| Days | **control** | **W5-0** | **W5-0,2** | **W5-0,4** | **W5-0,7** | **W5-1,1** | **W5-1,5** |
|---|---|---|---|---|---|---|---|
| **0** | 12 | 12 | 12 | 12 | 12 | 12 | 12 |
| **1** | 12 | 12 | 12 | 12 | 12 | 12 | 12 |
| **2** | 12 | 12 | 12 | 12 | 12 | 12 | 12 |
| **3** | 12 | 12 | 12 | 12 | 12 | 12 | 12 |
| **6** | 12 | 12 | 12 | 12 | 12 | 12 | 12 |
| **7** | 12 | 12 | 12 | 12 | 12 | 12 | 12 |
| **8** | 12 | 12 | 12 | 12 | 12 | 12 | 12 |
| **9** | 12 | 12 | 12 | 12 | 12 | 12 | 12 |
| **10** | 12 | 12 | 12 | 12 | 12 | 12 | 12 |
| **11** | 11 | 12 | 12 | 12 | 11 | 11 | 11 |
| **15** | 9,5 | 11 | 12 | 11 | 11 | 11 | 11 |
| **16** | 9,5 | 11 | 12 | 11 | 11 | 11 | 10 |
| **20** | 9 | 11 | 12 | 11 | 11 | 11 | 10 |
| **21** | 8,5 | 11 | 12 | 11 | 11 | 11 | 10 |
| **22** | 8,5 | 11 | 12 | 11 | 11 | 11 | 10 |
| **23** | 8,5 | 11 | 12 | 11 | 11 | 11 | 10 |
| **24** | 8,5 | 11 | 12 | 10 | 11 | 11 | 10 |
| **27** | 7 | 11 | 11 | 7 | 8 | 9 | 6 |
| **29** | 7 | 11 | 11 | 7 | 8 | 9 | 6 |
| **31** | 5,5 | 10 | 11 | 6 | 7 | 8 | 4 |
| **34** | 4,5 | 9 | 11 | 6 | 5 | 8 | 3 |

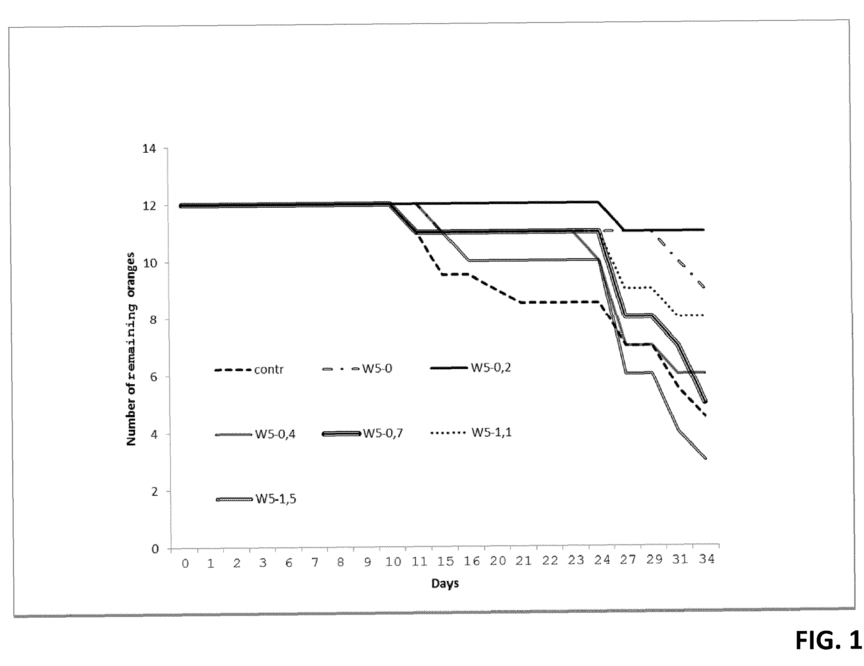

The results of table 8 are also represented in the diagram of Fig. 1. The results of table 1 and Fig. 1 show clearly that a coating in the form of a dispersion, the balance of the composition being water, comprising a polymer produced from the monomers vinyl acetate and ethylene and optionally a vinyl ester of a highly branched carboxylic acid and glycerol in an amount between 0,0 and 1,5 % by weight of the polymer within the composition when applied on oranges has an advantageous effect on the shelf life of oranges. It is clear that after 11 days rotting of oranges without a coating develops more progressively than when oranges are coated. The results in table 8 and fig. 1 show that the effect of prolonged shelf life is present for all coatings tested but develop in a glycerol-dose related manner, further supporting the assumed concept of its mechanism of action; it follows that shelf life is prolonged compared to uncoated oranges for at least 10 days. The best results are obtained when a glycerol concentration of less than 0,4 % and more than 0,0 % is used. In the latter case the majority of the oranges has still not shown signs of rotting after 34 days.

## Claims

1. A method for coating fruit to inhibit or prevent maturation and ripening of climacteric fruit during post-harvest storage and transport, comprising applying post-harvest to said fruit a composition comprising a polymer produced from the monomers vinyl acetate and ethylene and optionally a vinyl ester of a highly branched carboxylic acid, and optionally glycerol to form a coating, the composition being in the form of a dispersion and the balance of the composition being water.

2. The method according to claim 1, wherein the composition is applied to said fruit by spraying or immersion.

3. The method according to claim 1 or 2, wherein the composition comprises glycerol, in an amount of between 0,0 and 2 % by weight of the polymer within the composition.

4. A fruit item, coated with a composition comprising a polymer produced from the monomers vinyl acetate and ethylene and optionally a vinyl ester of a highly branched carboxylic acid; and optionally glycerol.

5. The fruit item according to claim 4, which is mango, or citrus fruit, such as an orange.

6. The fruit item according to claim 4 or 5, wherein the thickness of the coating is from 0,3 to 12 µm.

7. The fruit item according to any of the claims 4-6, wherein the coating comprises glycerol in an amount of between 0,0 and 2 % by weight of the polymer within the coating.

8. A composition for coating fruit to inhibit or prevent maturation and ripening of climacteric fruit during post-harvest storage and transport, which composition comprises a polymer produced from the monomers vinyl acetate and ethylene and optionally a vinyl ester of a highly branched carboxylic acid and glycerol in an amount of 0,0 or more and less than 1,0 % by weight of the polymer within the composition, the composition being in the form of a dispersion and the balance of the composition being water.

9. The composition according to claim 8, comprising glycerol in an amount of more than 0,0 and less than 0,4 % by weight of the polymer within the composition.

10. The composition according to claim 8, comprising glycerol in an amount of about 0,2 % by weight of the polymer within the composition.

11. The composition according to claim 8, comprising glycerol in an amount of about 0,3 % by weight of the polymer within the composition.

12. The composition according to any of the claims 8-11, comprising said polymer in an amount of from 1 to 25 % by weight of the composition.

13. The composition according to any one of the claims 8-12, further comprising one or more bioactive agents selected from the group consisting of ethylene oxidants or neutralizers, antibiotics, fungicides, stabilizers, antiparasitics, anti-infection means, other biologically active compounds, compounds controlling biological active molecules, useful bacteria, useful fungi, useful enzymes, UV-stabilizers and UV-blockers.

14. The composition according to anyone of the claims 8-13, comprising the one or more bioactive agents in an amount of less than 5 % by weight of the polymer within the composition.

15. The composition according to any one of the claims 8-14, which is essentially free of any organic solvents, especially free of alcohol solvents.
